# EUROPÄISCHE PATENTSCHRIFT

(11) **EP 0 630 901 B1**
(45) Veröffentlichungstag und Bekanntmachung des Hinweises auf die Patenterteilung: **13.01.1999**
(21) Anmeldenummer: 94109141.5
(22) Anmeldetag: 15.06.1994
(51) Int. Cl.: C07F 7/08, C11D 1/00

(54) **Silane mit hydrophilen Gruppen, deren Herstellung und Verwendung als Tenside in wässrigen Medien**
Silanes containing hydrophylic groups, their preparation and use as surfactants in aqueous media
Silanes contenant des groupements hydrophyliques, leur préparation et utilisation comme agents sensioactifs dans milieux aqueux

(30) Priorität: 24.06.1993 DE 4320920
(43) Veröffentlichungstag der Anmeldung: 28.12.1994
(73) Patentinhaber: Th. Goldschmidt AG, 45127 Essen (DE)
(72) Erfinder: Koerner, Götz, Dr., D-45259 Essen (DE); Knott, Wilfried, Dr., D-45141 Essen (DE); Klein, Klaus Dieter, Dr., D-45468 Mülheim (DE)

(56) Entgegenhaltungen:
- EP-A- 0 394 963
- GB-A- 2 203 152
- COLLECTION OF CZECHOSLOVAK CHEMICAL COMMUNICATIONS, Bd.39, 1974 Seiten 2247 - 2252W POLA, J. ET AL. 'ARTE OF ALKALINE HYDROLYSIS OF N-ALKYL ACETATES AND THEIR .OMEGA.-TERT-BUTYL, .OMEGA.-TRIMETHYLSILYL AND .OMEGA.-TRIMETHYLGERMY DERIVATIVES'
- ZHURNAL OBSHCHEI KHIMII, Bd.47, Nr.8, 1977 Seiten 1811 - 1812 MUSTAFAEV, S.N. ET AL. 'SYNTHESIS AND SOME REACTIONS OF UNSYMMETRICAL FORMALS OF 3-(TRIMETHYLSILYL)-1-PROPANOL'
- CHEMICAL ABSTRACTS, vol. 83, no. 8, 25. August 1975, Columbus, Ohio, US; abstract no. 62401d, TAKAHASHI, H. ET AL. 'STRUCTURAL EFFECTS ON THE PROPERTIES OF NONIONIC SURFACTANTS. IX. SYNTHESES AND SOME SURFACE ACTIVE PROPERTIES OF BIS /7,7-DIMETHYL-2-OXA-7-SI LAOCTYL)METHYLPOLY(OXYETHYLENE) MONOETHERS' Seite 241 ; & YUKAGAKU, Bd.24, Nr.5, 1975 Seiten 306 - 310
- CHEMICAL ABSTRACTS, vol. 73, no. 4, 27. Juli 1970, Columbus, Ohio, US; abstract no. 16624z, MAKI, H. ET AL. 'SYNTHESES AND PROPERTIES OF SURFACTANTS CONTAINING ORGANOMETALLIC COMPOUNDS. VI. SYNTHESES AND PROPERTIES OF SURFACTANTS WITH THREE-CHAINED HYDROPHOBIC GROUPS CONTAINING ORGANOTIN AND ORGANOSILICON COMPOUNDS' Seite 107 ; & YUKAGAKU, Bd.19, Nr.4, 1970 Seiten 245 - 251
- Tensid-Taschenbuch; 3. Ausgabe, Seiten 196-197

## Beschreibung

Die Erfindung betrifft neuartige Silane mit hydrophilen Gruppen, deren Herstellung und deren Verwendung als Tenside in wäßrigen Medien. Sie betrifft insbesondere hydrolysestabile Silantenside mit hoher Erniedrigung der Oberflächenspannung wäßriger Medien. Dabei sind unter dem Begriff der "wäßrigen" Medien auch solche Medien zu verstehen, die überwiegend aus Wasser bestehen und zusätzlich wasserlösliche oder mit Wasser mischbare organische Lösungsmittel enthalten können.

Es ist aus dem Stand der Technik bekannt, daß organomodifizierte Siloxane, wie z. B. Polyethersiloxane oder Polysiloxane, welche Substituenten mit anionischen, kationischen oder amphoteren Gruppen aufweisen, bei entsprechend ausgewählter Struktur und ausgewogenem Verhältnis hydrophiler und hydrophober Gruppen die Oberflächenspannung wäßriger Lösungen in ausgeprägtem Maße erniedrigen können.

Tenside mit mindestens drei Siliciumatomen sind in der DE-PS 41 41 046 beschrieben. Sie entsprechen dabei der allgemeinen Formel 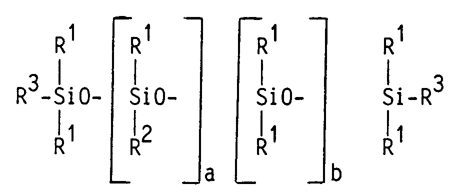
- R¹ =: Methyl- oder Phenylrest, wobei jedoch mindestens 90 % der R¹-Reste Methylreste sind,
- R² =: R¹ oder = -(CH₂)₆-OSO₃⁻.M⁺, M⁺ = Alkali-, 1/2 Erdalkali- oder gegebenenfalls alkylsubstituiertes Ammonium- Ion,
- R³ =: R¹ oder R², mit der Maßgabe, daß im durchschnittlichen Molekül mindestens 1 Rest R² oder R³ ein -(CH₂)₆-OSO₃⁻.M⁺ Rest ist,
- a: einen Zahlenwert von 0 bis 5 und
- b: einen Zahlenwert von 0 bis 5 hat.

Die ausgewählten, im Falle der Anwesenheit dreier Siliciumatome, Trisiloxanhexylsulfate bewirken in neutralen wäßrigen Medien eine ausgezeichnete Erniedrigung der Grenzflächenspannung auf Werte um 21 mN/m. Sie sind jedoch in sauren oder alkalischen Lösungen nicht beständig und verlieren durch Hydrolyse der Si-O-Si-Bindungen und erneute Kondensation der Hydrolyseprodukte zu höhermolekularen Oligomeren sehr schnell ihre Wirksamkeit und werden teilweise in wäßrigen Medien unlöslich.

Tenside mit niedrigem Gehalt an Siliciumatomen sind ferner in der EP-OS 0 367 381 (A2) und der GB-PS 1 520 421 beschrieben:

Die EP-OS 0 367 381 (A2) betrifft Organosiliciumverbindungen der allgemeinen Formel 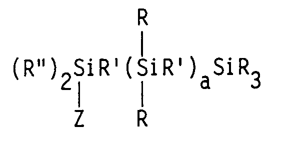
wobei R unabhängig voneinander einen Alkyl-, Aryl-, halogenierten Alkyl-oder halogenierten Arylrest, mit bis zu 18 Kohlenstoffatomen bedeutet,
jedes R' eine Alkylengruppe darstellt, welche die benachbarten Siliciumatome durch bis zu 6 Kohlenstoffatome voneinander trennt, und wobei
R'' unabhängig voneinander die Bedeutung von R hat oder, wenn a = Null ist, die Gruppe R₃SiR'- bedeutet. Z ist ein hydrophiler Substituent, der Schwefel, Stickstoff oder Phosphor enthält, eine carboxyfunktionelle Gruppe oder deren Salz. a hat einen Wert von 0, 1 oder 2.

Hieraus folgt, daß der siliciumorganische Rest definitionsgemäß mindestens zwei Siliciumatome enthält. Die Herstellung dieser Carbosilane ist relativ aufwendig und erfolgt beispielsweise durch Grignard-analoge Verfahren. Danach werden mittels Hydrosilylierung von beispielsweise Allylglycidylether oder Allylamin und an sich bekannten Folgereaktionen Carbosilantenside mit quaternärer, Sulfonat- oder Betainstruktur synthetisiert. Die so erhaltenen Substanzen erniedrigen die Oberflächenspannung einer 1 %igen Lösung in destilliertem Wasser auf 23 bis 25 mN/m.

In der GB-PS 1 520 421 werden Carbosilantenside und deren Herstellung beschrieben. Sie weisen die allgemeine Formel 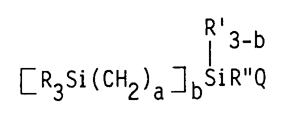 auf.
- R: ist ein Methyl-, Ethyl-, Propyl- oder Trifluorpropylrest, wobei jedoch wenigstens 50 % der Reste R Methylreste sind,
- R': ist ein Alkylrest mit 1 bis 6 Kohlenstoffatomen,
- R'': ist ein zweiwertiger aliphatischer Kohlenwasserstoffrest mit 2 bis 6 Kohlenstoffatomen, der Q und das benachbarte Siliciumatom durch eine Brücke von mindestens 2 Kohlenstoffatomen verbindet,
- Q: ist dabei die Gruppe -O(C₂H₄O)_{c}X, wobei c einen Wert von 3 bis 12 hat und X ein Wasserstoffrest, der Rest R''', 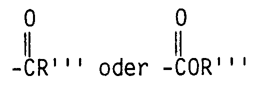 ist, in welchem R''' ein Alkylrest mit 1 bis 5 Kohlenstoffatomen ist, und a = 1 oder 2 und b = 2 oder 3 ist.

Auch hier müssen definitionsgemäß mindestens zwei Siliciumatome vorhanden sein. Diese Verbindungen zeigen in anwendungstechnischen Tests bemerkenswerte Schaumeigenschaften.

Dabei war es dem Fachmann bekannt, daß bei diesen bekannten Carbosilanen innerhalb von Gruppen mit vergleichbarer Struktur bei abnehmender Anzahl der Siliciumatome, insbesondere bei einer Reduzierung der Anzahl der Siliciumatome von 4 auf 3 oder 2, sich die tensidischen Eigenschaften der Verbindungen verschlechterten. Diese Beobachtung fand ihren Niederschlag in der Theorie von Neumann (A.W. Neumann, D. Renzow, Zeitschrift f. Phys. Chem., new issue 68, 11 (1969)), die besagt, daß für die Erniedrigung der Oberflächenspannung wäßriger Lösungen bis auf unter 30 bis 40 mN/m die permethylierte Oberfläche des Siloxangerüstes verantwortlich ist.

Weiterhin ist auf die japanischen Publikationen von H. Maki et al. in YUKAGAGU 19, No. 4, S. 245 - 251 und YUKAGAGU 19, No. 11, S. 23 ff. - beide aus dem Jahre 1970 - hinzuweisen, in denen definierte Verbindungen der Formel

(CH₃)₃Si(CH₂)₃(C₂H₄O)ₙH und (CH₃(CH₂)₃)₃Si(CH₂)₃(C₂H₄O)ₘH

wobei n = 4,0 oder 7,7 und m = 10 oder 17 ist, beschrieben werden. Diese Verbindungen zeigen in 1 gew.-%iger Lösung aber nur eine Erniedrigung der Grenzflächenspannung auf Werte ≥ 26,5 mN/m.

In diesen japanischen Veröffentlichungen werden ebenfalls quaternäre Stickstoffverbindungen der Formel

Bu₃M(CH₂)₃N⁺(CH₃)₃Cl⁻ (Bu = Butyl, M = Sn, Si)

beschrieben, die zwar bakteriostatisch wirksam sind, jedoch wenig tensidischen Charakter aufweisen. Beste Vertreter dieser quaternären Verbindungen bewirkten in einer 1 %igen wäßrigen Lösung eine Oberflächenspannungserniedrigung auf 32 mN/m.

Der vorliegenden Erfindung liegt die überraschende Erkenntnis zugrunde, daß, im Gegensatz zum allgemeinen Fachwissen, wie es z. B. in der Theorie von Neumann zum Ausdruck kommt, ausgewählte Silane, also Verbindungen mit nur einem einzigen Siliciumatom, bei denen das Verhältnis der hydrophilen und hydrophoben Molekülteile ausgewogen ist, die Oberflächenspannung von Wasser außerordentlich wirksam erniedrigen und dabei im Gegensatz zu den Siloxantensiden auch in sauren und alkalischen Medien über Tage und Wochen hydrolysestabil sind. Ein weiterer und nicht vorhersehbarer Vorteil der erfindungsgemäßen Silane ist deren vollständige biologische Abbaubarkeit, die sie für ihre Anwendung als Tenside besonders geeignet macht. Ein solches Eigenschaftsprofil ließ sich aus dem Stand der Technik nicht herleiten und widerspricht den bisher üblichen Annahmen über die strukturellen Anforderungen, die siliciumorganische Verbindungen erfüllen sollten, um in wäßrigen Systemen grenzflächenspannungserniedrigende Eigenschaften zu zeigen.

Ein Gegenstand der vorliegenden Erfindung sind deshalb Silane der allgemeinen Formel 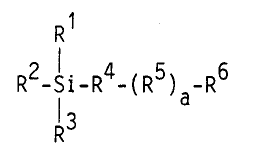 wobei
- R¹, R² und R³: im Molekül gleich oder verschieden sind und Alkylreste mit 1 bis 4 Kohlenstoffatomen bedeuten,
- R⁴: ein zweiwertiger Kohlenwasserstoffrest mit 3 bis 14 Kohlenstoffatomen ist,
- R⁵: ein Rest der Formel -O(CH₂)_{b}- oder ein Polyetherrest der Formel -(OCₙH₂ₙ)_{c}- ist, wobei b einen Wert von 1 bis 6 hat und, wenn R⁴ der Propylrest ist, b>1 ist, n einen mittleren Wert von 2 bis 2,5 und c einen Wert von 1 bis 10 hat,
- R⁶: ein Rest -OSO₃X oder ein -OR⁷ Rest ist, wobei X ein Wasserstoff-, Alkali- oder ein gegebenenfalls substituiertes Ammonium-Ion und R⁷ ein Alkylrest mit 1 bis 4 Kohlenstoffatomen oder ein Acetylrest ist,
- a: 0 oder 1 ist,
mit der Maßgabe, daß, wenn R⁶ die Bedeutung des -OR⁷ Restes hat, a = 1 ist.

Vorzugsweise sind mindestens 90 % der Reste R¹, R² und R³ Methylreste.

R⁴ ist ein zweiwertiger Kohlenwasserstoffrest mit 3 bis 14 Kohlenstoffatomen, wie beispielsweise -C₃H₆-, -C₅H₁₀-, -C₆H₁₂-oder -C₁₁H₂₂-Reste. Die Reste R⁴ können substituiert sein, z. B. durch seitenständige Alkylgruppen oder Halogenreste. Bevorzugt sind jedoch die linearen Kohlenwasserstoffreste.

Weitere Beispiele für Reste R⁴ sind Reste der Formel

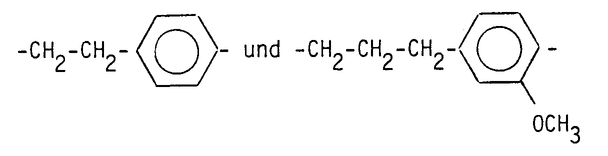

Vorzugsweise ist R⁴ ein zweiwertiger aliphatischer Kohlenwasserstoffrest mit 3 bis 9 Kohlenstoffatomen, insbesondere mit 3 bis 6 Kohlenstoffatomen.

R⁵ ist ein Rest der Formel O(CH₂)_{b}- oder ein Polyetherrest der Formel -(OCₙH₂ₙ)_{c}-, wobei b einen Wert von 1 bis 6, n einen mittleren Wert von 2 bis 2,5 und c einen Wert von 1 bis 10 hat. Beispiele solcher Reste sind die Reste -O(CH₂)₄-, -(OC₂H₄)_{c}-oder -(OCH(CH₃)CH₂)_{c}-.

n hat vorzugsweise einen Wert von 2,0, so daß in diesem Falle alle Oxyalkylen-Einheiten Oxyethylen-Einheiten sind. Der Index c gibt die Anzahl dieser Einheiten an und hat einen Wert von 1 bis 10, vorzugsweise von 3 bis 6.

R⁶ ist ein Rest -OSO₃X oder ein -OR⁷ Rest, wobei X ein Wasserstoff-, Alkali- oder ein gegebenenfalls substituiertes Ammonium-Ion und R⁷ ein Alkylrest mit 1 bis 4 Kohlenstoffatomen oder ein Acetylrest ist. Als substituierte Ammonium-Ionen kommen insbesondere Isopropyl-, Triethyl-, Butylmethyl- oder Octyl-Ammonium-Ionen in Frage. Ist R⁷ ein Alkylrest, ist der Methyl-, Ethyl- oder Propylrest bevorzugt.

a hat einen Wert von 0 oder 1.

Durch die Maßgabe, daß, wenn R⁶ die Bedeutung des Restes -OR⁷ hat, a = 1 ist, wird sichergestellt, daß folgende Typen von erfindungsgemäßen Silanen erfaßt werden:
a) Silane, welche eine Spacergruppe aufweisen, an welche direkt eine endständige Sulfatogruppe gebunden ist,
b) Silane, welche eine Spacergruppe aufweisen, an welche eine (Poly)ethergruppe und an diese endständig eine Sulfatogruppe gebunden ist,
c) Silane, welche eine Spacergruppe aufweisen, an welche eine (Poly)ethergruppe gebunden ist, welche endständig einen OR⁷ Rest aufweist.

Beispiele erfindungsgemäßer Silane sind 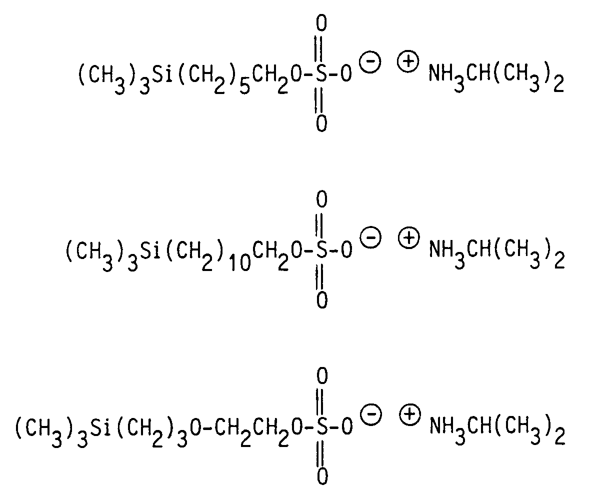 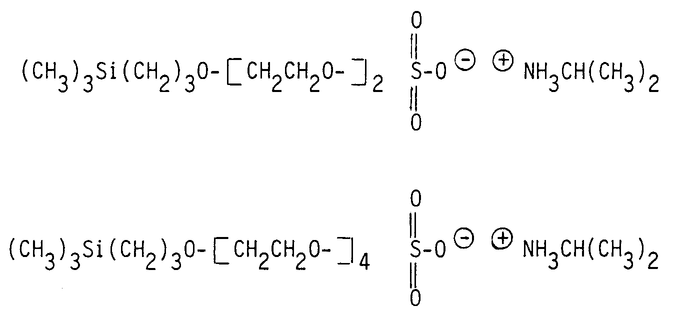 (CH₃)₃Si(CH₂)₃-O-CH₂CH₂-OCH₃ ; (CH₃)₃Si(CH₂)₆-O-[CH₂CH₂O-]₂C₂H₅
(CH₃)₃Si(CH₂)₆-O-[CH₂CH₂O-]₄C₂H₅
(CH₃)₃Si(CH₂)₆-O-[CH₂CH₂O-]₆COCH₃

Ein weiterer Gegenstand der Erfindung ist die Herstellung der erfindungsgemäßen Verbindungen. Die Verbindungen können nach verschiedenen Verfahren hergestellt werden, die dadurch gekennzeichnet sind, daß man
a) an Silane der allgemeinen Formel 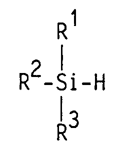 entweder
   (i) Verbindungen der allgemeinen Formel CH₂=CH-R⁸-OH, in der R⁸ ein zweiwertiger aliphatischer Kohlenwasserstoffrest mit 1 bis 12 Kohlenstoffatomen ist, in Gegenwart eines Hydrosilylierungskatalysators anlagert und gegebenenfalls c Mol eines Alkylenoxids der allgmeinen Formel 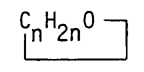 in Gegenwart eines alkalischen Katalysators oder einer Lewis-Säure addiert oder
   (ii) Verbindungen der allgemeinen Formel CH₂=CH-R-⁸(R⁵)ₐ-OH, in der R⁵ und R⁸ die bereits angegebene Bedeutung haben, in Gegenwart eines Hydrosilylierungskatalysators anlagert oder
   (iii) Verbindungen der allgemeinen Formel CH₂=CH-R⁸-R⁵)ₐ-OR⁷, in der R⁵, R⁷ und R⁸ die bereits angegebene Bedeutung haben, in Gegenwart eines Hydrosilylierungskatalysators anlagert
   und
b) die gemäß Verfahrensweise (i) und (ii) erhaltenen Verbindungen der Formel 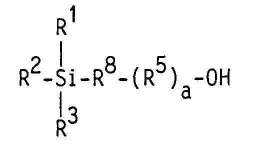 in an sich bekannter Weise sulfatiert und, falls erwünscht, mit Alkalihydroxid oder Ammoniumhydroxid, dessen am Stickstoffatom befindliche Wasserstoffatome substituiert sein können, neutralisiert.

Vorzugsweise führt man die Hydrosilylierung bei erhöhter Temperatur und/oder in Gegenwart eines Lösungsmittels durch, wobei man als Katalysator einen Platinkatalysator verwendet.

Bei der Verfahrensvariante (i) wird an das SiH-Silan zunächst ein Alkohol angelagert, welcher eine endständige olefinische Doppelbindung aufweist. An die endständige OH-Gruppe des erhaltenen Hydrosilylierungsproduktes werden dann c Mol des Alkylenoxids oder des Alkylenoxidgemisches in Gegenwart eines an sich bekannten Alkoxylierungskatalysators addiert. Als Oxalkylierungskatalysatoren sind alkalische Katalysatoren, wie KOH, NaOH, Alkalialkoholate oder Lewis-Säuren, wie etwa BF₃-Etherat bevorzugt verwendbar. Das erhaltene (Poly)ethermonool wird anschließend in an sich bekannter Weise sulfatiert und gegebenenfalls mit Alkalihydroxid oder Ammoniumhydroxid neutralisiert, wobei das Ammoniumhydroxid mit Kohlenwasserstoffresten am Stickstoffatom substituiert sein kann. Das bei der Umsetzung entstehende Ammoniumsalz kann auch durch eine Metathesereaktion mit Alkylaminen unter Abspaltung von Ammoniak leicht in das entsprechende Alkylammoniumsalz überführt werden. Durch die Verwendung entsprechender Alkylamine können die Eigenschaften der erhaltenen Sulfatestersalze modifiziert werden. Dies bezieht sich insbesondere auf das Netzvermögen und das Schaumvermögen.

Es ist dem Fachmann bekannt, daß die kritische Micellbildungskonstante [cmc] in wäßrigen Lösungen, die eine wichtige Größe zur Charakterisierung des tensidischen Verhaltens einer Verbindung ist, vom Bindungsgrad des Gegenions zum Tensidrest abhängt. So nimmt durch eine verstärkte Bindung des Gegenions zum Tensidrest die cmc des Tensids ab. Der Grad der Bindung ist dabei abhängig von der Polarisierbarkeit, der Valenz und der Hydrathülle des Gegenions. Daher werden die tensidspezifischen Eigenschaften, wie Schaum- und Netzvermögen, Löslichkeit und Oberflächenspannungserniedrigung, einer Verbindung nicht nur vom Tensidrest, sondern auch vom Gegenion beeinflußt. Demnach ist es auch verständlich, daß bei der Vielzahl der zur Verfügung stehenden organischen Ammoniumkationen und der technisch sehr einfachen Überführungsmethode der beanspruchten Verbindung in die entsprechenden Alkylammoniumderivate natürlich auch eine Vielzahl von Verbindungen mit anwendungstechnisch wertvollen Eigenschaften hergestellt werden kann.

Bei der zweiten Verfahrensvariante (ii) wird der bereits alkoxylierte Alkohol, der eine endständige Doppelbindung aufweist, an das Wasserstoffsilan angelagert und kann dann, wie vorstehend beschrieben, sulfatiert und neutralisiert werden.

Bei der dritten Verfahrensvariante (iii) wird die olefinisch ungesättigte Verbindung CH₂=CH-R⁸-(R⁵)ₐ-OR⁷ an das SiH-Silan angelagert. Wenn auch Reaktionen an der endständigen -OR⁷-Gruppe möglich sind, wird das Reaktionsprodukt aber meist in der so erhaltenen Form angewendet.

Zur Optimierung der grenzflächenaktiven Eigenschaften der erfindungsgemäßen Verbindungen müssen deren hydrophile und hydrophobe Gruppen in einem ausgewogenen Verhältnis vorliegen. Die hydrophoben Eigenschaften können über die Reste R¹, R², R³, R⁷ beeinflußt werden. Je kohlenstoffreicher die Reste sind, desto hydrophober ist das erfindungsgemäße Silan. Die Hydrophilie wird insbesondere durch den Rest R⁵ und die anionische Sulfatgruppe bestimmt. Je niedriger innerhalb des angegebenen Bereiches der Zahlenwert von n und je höher der Zahlenwert von c ist, um so hydrophiler ist das Silantensid. Diese Beeinflussung der tensidischen Eigenschaften wird in den Beispielen noch näher erläutert und damit für den Fachmann leicht verständlich. Zur Erzielung der gewünschten Eigenschaften bedarf es somit nur einiger zumutbarer Vorversuche, die keinerlei erfinderischen Zutuns bedürfen.

Ein weiterer Gegenstand der Erfindung ist die Verwendung der erfindungsgemäßen Silane als Tenside in wäßrigen Medien. Es ist dabei möglich, durch Zugabe von 1 Gew.-% erfindungsgemäßer Verbindungen die Oberflächenspannung wäßriger Lösungen auf Werte bis zu etwa 21 mN/m zu erniedrigen. Dabei ist die biologische Abbaubarkeit der erfindungsgemäßen Verbindungen von ganz besonderer Bedeutung. Sie wird ergänzt durch die Hydrolysestabilität der Silantenside.

Wichtige Einsatzmöglichkeiten der erfindungsgemäßen Silantenside sind u. a.:
als Netzmittel:
   in Zubereitungen zur Behandlung von Pflanzen (Agroformulierungen); zur Verbesserung der Benetzung niederenergetischer Substrate, wie etwa Polyethylen-, Polypropylenoberflächen; für die Anwendung in der Lackindustrie; bei der Herstellung photografischer Filme; in der Galvanotechnik;
als Dispergiermittel:
   für Dispersionsfarbstoffe, Pigmente und Füllstoffe;
   als Emulgiermittel oder Zusatzstoffe in der Textilindustrie zur Herstellung von Textilhilfsmitteln, Avivagen, Gleitmitteln, antistatischen Zubereitungen; als Färbereihilfsmittel;
als Tenside allgemein:
   zur Verwendung in Feuerlöschmitteln; als Schaumstabilisatoren; als grenzflächenaktive Zusätze für Schnelldrucktinten, Klebstoffe, Dispersionsklebstoffe, Schmelzkleber; Verwendung in Waschmitteln; als Zusatzstoffe für technische Reiniger;
   als Rohstoffe für die Verwendung in der Kosmetik, z. B. in Pflegemitteln, Shampoos, Duschbädern;
in technischen Anwendungen und im Haushalt:
   als Antibeschlagmittel; zur Verwendung in Geschirrspülmitteln, Waschmitteln, WC-Reinigern, Selbstglanzemulsionen.

Die Herstellung der erfindungsgemäßen Verbindungen und deren Eigenschaften werden in den folgenden Beispielen noch näher erläutert.

### Beispiel 1

### a) Herstellung von [6-Hydroxyhexyl]trimethylsilan (nicht erfindungsgemäßes Zwischenprodukt)

In einen 300-ml-Laborautoklaven werden 28,7 g 1-Hexen-5-ol (0,287 Mol) und 3 mg Platinkatalysator eingewogen. Der Autoklav wird nun samt Inhalt unter Argon-Schutzgasbedampfung in einem Aceton/Trockeneisbad gekühlt. Es werden 22,4 g Trimethylsilan (0,299 Mol, Kp. = 6,7°C) aus kondensierter Phase übergehebert. Der Autoklav wird verschlossen und auf 130°C geheizt. Dabei steigt der Innendruck bis auf 13,7 bar an, um dann auf ca. 5,7 bar wieder abzufallen, was eine Reaktion signalisiert.

Nach der Entspannung des Autoklaven, die nach dem Abkühlen auf Raumtemperatur erfolgt, wird der Inhalt (Auswaage: 50,7 g, Masseverlust: 0,9 g) durch Filtration vom Platinkatalysator befreit.
- Hydroxylzahl:: Theorie 321,7 Praxis 306,0

Die ²⁹Si-NMR- und ¹H-NMR-spektroskopische Analyse ergibt folgende Produktstruktur:

(CH₃)₃Si(CH₂)₆OH

Das Produkt wird im Ölpumpenvakuum bei 20°C von niederflüchtigen Bestandteilen befreit.

### b) Herstellung eines [Polyoxyethylen]trimethylsilans durch Ethoxylierung von [Hydroxyhexyl]trimethylsilan (nicht erfindungsgemäßes Zwischenprodukt)

In einem Dreihalskolben, der mit einem Intensivkühler, Thermometer, Kühlmanteltropftrichter sowie einem Stickstoffanschluß ausgerüstet ist, werden 20,0 g (0,11 Mol) [Hydroxyhexyl]trimethylsilan und 0,82 g einer 50 %igen Bortrifluorid-Etherat-Lösung vorgelegt. Dann werden 21,1 g (0,48 Mol) einkondensiertes Ethylenoxid langsam zugetropft. Der exothermen Reaktion wird mit einem Eisbad entgegengewirkt, so daß die Innentemperatur 20 bis 30°C nicht überschreitet. Danach wird noch zwei Stunden bei Raumtemperatur nachgerührt, und nach Neutralisation mit 1,50 g Natriumhydrogencarbonat und 0,41 g Wasser (1 Gew.-%) werden die flüchtigen Bestandteile im Wasserstrahlvakuum bei 90°C aus dem Produkt entfernt. Die anschließende Filtration unter vorheriger Zugabe von Filterhilfsmitteln ergibt ein schwach gelb gefärbtes, klares Produkt, das gemäß ¹H-Spektroskopie sowie der Gel-Permeations-Chromatographie 4,2 Oxyalkylen-Einheiten aufweist und demnach durch folgende mittlere Formel wiedergegeben werden kann:

(CH₃)₃Si-(CH₂)₆-O-[CH₂CH₂O]_{4,2}-H

### c1) Herstellung eines erfindungsgemäßen Produktes der Formel

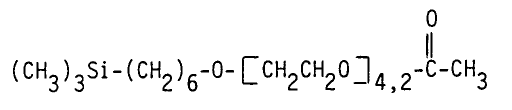

In einem Dreihalskolben, der mit Rückflußkühler und einem Innenthermometer ausgerüstet ist, werden 31,45 g (0,087 Mol) des Produktes 1b) zusammen mit 14 g (0,3 Mol) Essigsäureanhydrid, 1,9 g Natriumacetat und 100 ml Toluol vorgelegt und 2 Stunden unter Rückfluß erhitzt.

Nach Abdestillieren des Lösungsmittels beträgt die Säurezahl 9,7. Zur Neutralisation des Produktes wird Natriumhydrogencarbonat in etwas Wasser aufgeschlämmt und dem Rohprodukt zugegeben.

Danach werden im Wasserstrahlvakuum bei ca. 90°C die flüchtigen Bestandteile entfernt und die ausgeschiedenen Salze abfiltriert.

Dieses Produkt wird in einer Konzentration von 1 bzw. 0,1 Gew.-% in destilliertem Wasser gelöst. Nach 24stündiger Lagerung werden diese Lösungen hinsichtlich ihrer Spreitfähigkeit auf Polypropylenfolie (50-µl-Tropfen) untersucht.

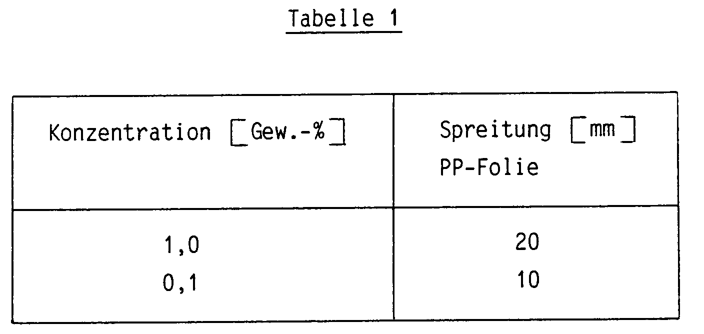

### c2) Herstellung eines erfindungsgemäßen Produktes der Formel

(CH₃)₃Si-(CH₂)₆-O-[CH₂CH₂O]_{4,2}-CH₃

In einem Dreihalskolben, versehen mit Rückflußkühler, Destillationsbrücke sowie Innenthermometer, werden 37,5 g (0,1 Mol) Produkt 1b) vorgelegt und bei 115°C langsam mit 27 g Natriummethanolatlösung (0,15 Mol; 30 %ig in Methanol) versetzt. Dabei wird durch Anlegen eines leichten Vakuums kontinuierlich gebildetes Methanol abdestilliert.

Nach beendeter Zugabe wird zunächst im Wasserstrahlvakuum dann im Ölpumpenvakuum das restliche Methanol entfernt. Anschließend wird die Apparatur mit Stickstoff belüftet und Methylenchlorid im starken Strom unter kräftigem Rühren übergeleitet. Dem Überschreiten einer Innentemperatur über 120°C wird mittels Eisbadkühlung entgegengewirkt. Wenn ein Nachlassen der Exothermie festgestellt wird, kann durch externes Aufheizen die Temperatur bei 115 bis 120°C gehalten werden.

Nachdem im Reaktionsansatz durch Bestimmung der Alkalizahl kaum noch Alkali festgestellt wird, kann die Methylenchlorid-Einleitung beendet werden. Nach Abkühlen der Reaktionsmischung bis auf 60°C werden 2 ml Wasser hinzugefügt und mit einer 30 %igen wäßrigen Phosphorsäurelösung neutralisiert. Das Rohprodukt wird am Rotationsverdampfer bei 60°C und Wasserstrahlvakuum von flüchtigen Bestandteilen befreit und nach der Zugabe von Filterhilfsmitteln filtriert.

Man erhält ein gelbliches, klares Produkt, welches sich trübe in Wasser löst. Wäßrige Lösungen dieses Produktes zeigen in Abhängigkeit von der Konzentration folgende tensidische Eigenschaften:

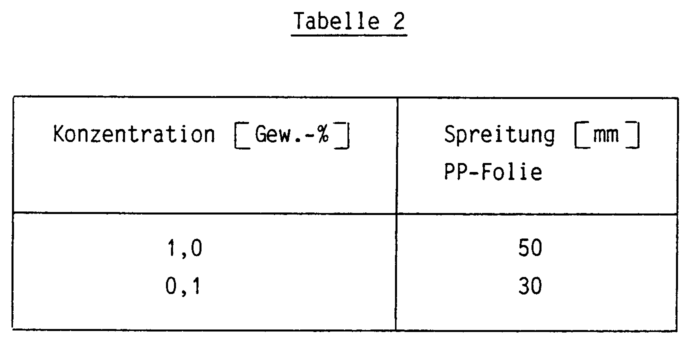

### Beispiel 2

### a) Herstellung eines Polyoxyalkylentrimethylsilans der Formel (CH₃)₃Si(CH₂)₆[OCH₂CH₂]₄OH durch Hydrosilylierung (nicht erfindungsgemäßes Zwischenprodukt)

In einen 300-ml-Laborautoklaven werden 88,14 g Hexenylpolyether der Formel CH₂=CH(CH₂)₄[OCH₂CH₂]₄OH (0,3 Mol, Hydroxylzahl 203,4, Iodzahl 86,4) und 5 mg Platinkatalysator eingewogen. Der Autoklav wird nun samt Inhalt unter Argon-Schutzgasbedampfung in einem Aceton/Trockeneisbad gekühlt, und 23,34 g Trimethylsilan (0,315 Mol) werden übergehebert. Der Autoklav wird verschlossen und auf 130°C geheizt. Dabei steigt der Innendruck bis auf 8,0 bar an, um dann auf ca. 3,5 bar wieder abzufallen.

Nach der Entspannung des Autoklaven, die nach dem Abkühlen auf Raumtemperatur erfolgt, wird der Inhalt (Auswaage: 109,0 g, Masseverlust: 0,6 g) durch Filtration vom Platinkatalysator befreit.
- Hydroxylzahl:: Theorie 152,5 Praxis 158,0

Man erhält ein wasserhelles, wenig viskoses Produkt, das sich trübe 1 %ig in destilliertem Wasser löst.

### b) Herstellung von [Isopropylammonium-6-sulfatohexyl]trimethylsilan durch Sulfatierung mit Amidoschwefelsäure (erfindungsgemäß)

In einem 100-ml-Vierhalskolben, ausgestattet mit Rüher, Rückflußkühler, Thermometer und Tropftrichter, werden 18,33 g [Hydroxyhexyl]trimethylsilan (0,1 Mol, Produkt aus Beispiel 1), 10,19 g frisch gemörserte Amidoschwefelsäure (0,105 Mol) und 9,6 g Dimethylformamid unter Stickstoffbedampfung gemischt und 4 Stunden auf 85°C Innentemperatur erhitzt. Die Reaktionsmischung wird danach bei Raumtemperatur mit 7,09 g i-Propylamin (0,12 Mol) versetzt, wobei sich die Mischung erwärmt und Ammoniakgas entweicht. Dadurch werden gleichzeitig im Produkt vorhandene Säurereste neutralisiert. Danach wird filtriert und das Produkt bei 85°C im Ölpumpenvakuum von N,N-Dimethylformamid und überschüssigem Isopropylamin befreit.

Man erhält ein gelbliches, wasserklares und wenig viskoses Produkt, das sich klar in Wasser löst und dann stark beim Umschütteln schäumt. Die 1 %ige Lösung in destilliertem Wasser weist eine Oberflächenspannung von 21,0 mN/m auf und ergibt auf einer Polypropylenplatte eine Spreitung von 55 mm. Analytische Untersuchungen mittels ¹H- und ¹³C-NMR-Spektroskopie bestätigen, daß das Umsetzungsprodukt die erwartete Struktur 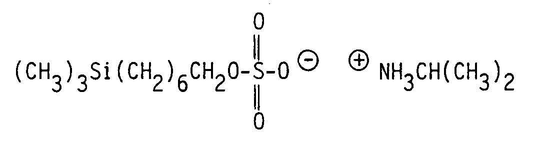 besitzt.

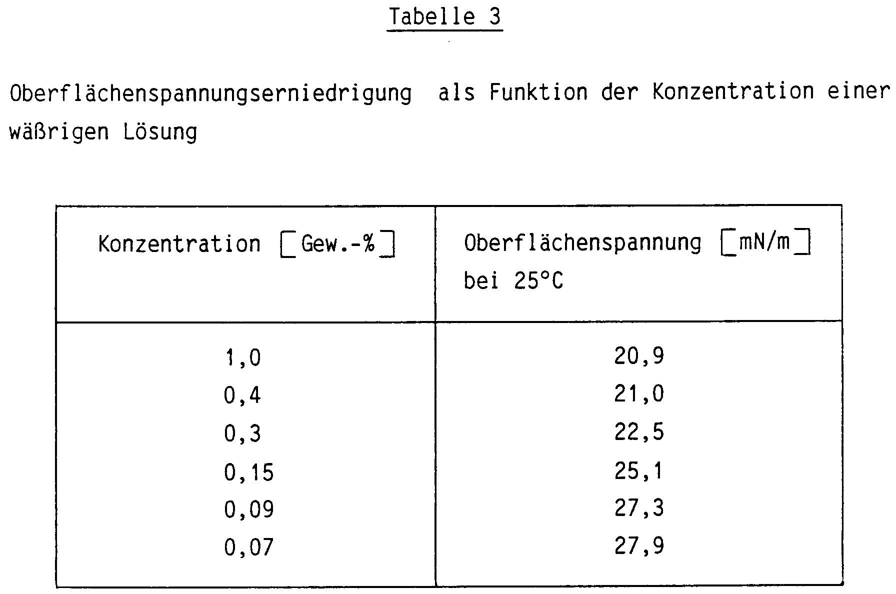

### Beispiel 3

### Herstellung weiterer erfindungsgemäßer Verbindungen und Bestimmung ihrer tensidischen Eigenschaften

Es werden, wie in den vorangegangenen Beispielen gezeigt, als weitere Ausgangsverbindungen hydroxyalkylfunktionelle Trimethylsilanderivate durch Platin-katalysierte Anlagerung von Allylalkohol, 3-Buten-1-ol, Undecen-1-ol und olefinfunktionellen Ethern oder Polyethern an Trimethylsilan hergestellt. Daran anschließend werden diese Verbindungen mit Amidoschwefelsäure sulfatiert und in die entsprechenden Ammoniumsalze überführt.

Es werden zunächst jeweils wäßrige Lösungen mit einer Konzentration von 1 Gew.-% Produkt zubereitet und deren Oberflächenspannung nach der Du-Noüy-Methode ermittelt. Zur Bestimmung des Netzvermögens wird die Spreitung eines 50-µl-Tropfens der 1 %igen Tensid-Lösung auf einer Polypropylenfolie über die maximale Flächenausdehnung gemessen. Reines Wasser liefert unter diesen Bedingungen einen Blindwert von 8 mm. Die Langzeithydrolysestabilität wird ebenfalls durch Beobachtung der Netzeigenschaft einer 1-%-Lösung verfolgt.

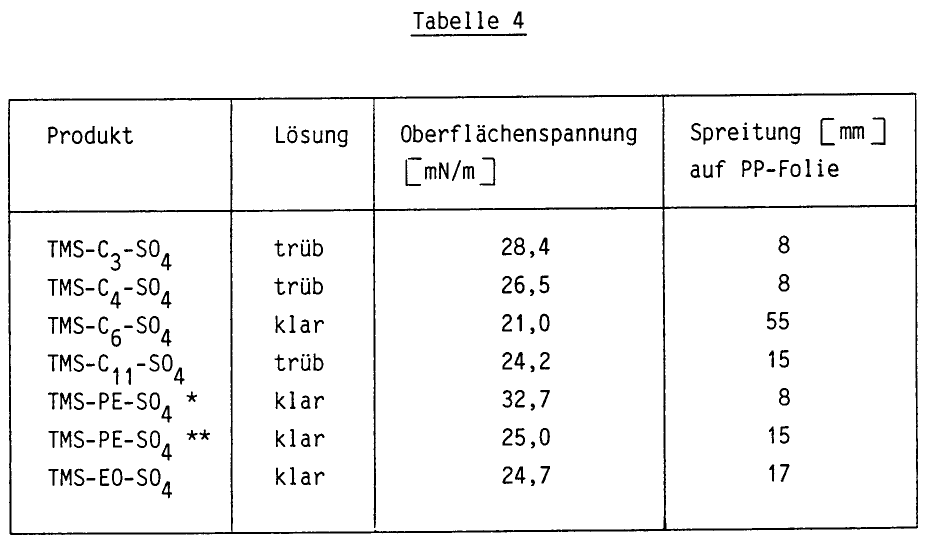

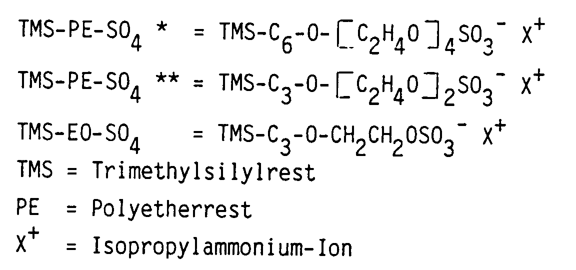

Die Verbindungen weisen ausgeprägte tensidische Eigenschaften auf. Die besten tensidischen Eigenschaften zeigt im Falle der Sulfatester [Isopropylammonium-6-sulfatohexyl]trimethylsilan. Dabei ist zu erkennen, daß die tensidischen Eigenschaften bei identischen Resten R¹, R² und R³ von der Länge der Spacergruppe R⁴ abhängen.
Innerhalb einer homologen Reihe mit 3 bis 11 Kohlenstoffatomen liegt das Optimum der Eigenschaften bei einer Spacergruppe mit etwa 6 Kohlenstoffatomen.

### Beispiel 4

In analoger Art und Weise, wie in Beispiel 2 beschrieben, kann das Trimethylsilylhexylsulfat-Ammoniumsalz durch diverse organische Aminbasen unter Freisetzung von Ammoniak in die entsprechenden Alkylammoniumsalze überführt werden. Durch diesen Modifizierungsschritt werden Produkte mit vielfältigen Eigenschaften in bezug auf Oberflächenspannungserniedrigung, Netz- und Schaumeigenschaften zugänglich, wie aus der folgenden Tabelle hervorgeht:

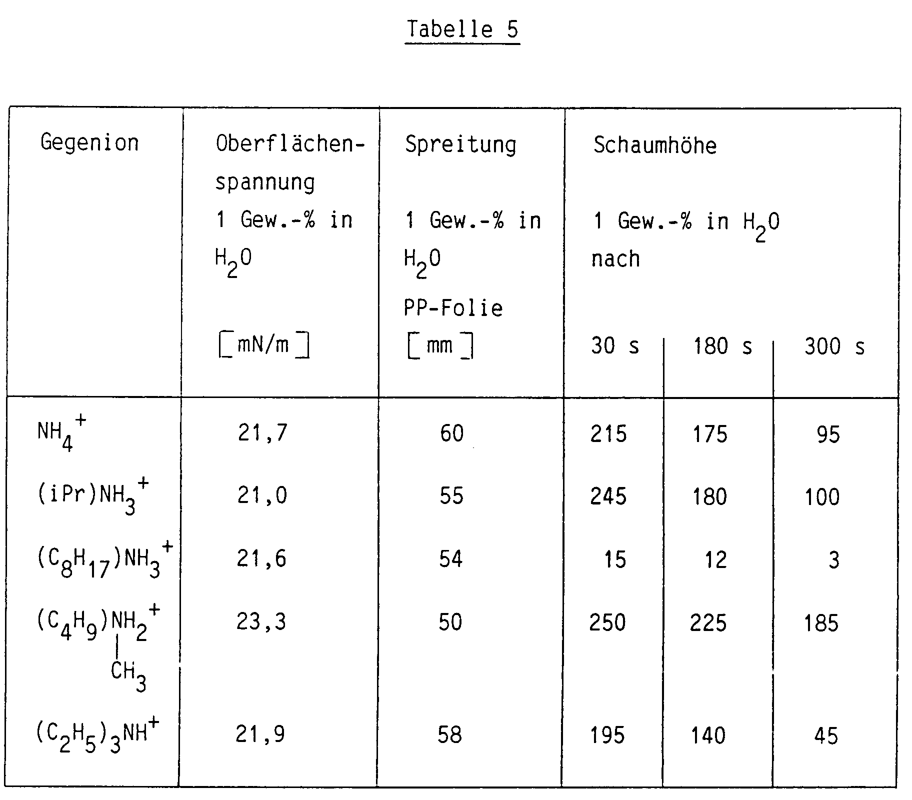

### Beispiel 5

### Überprüfung der Hydrolysestabilität der erfindungsgemäßen Substanzen bei pH 4, pH 7 und pH 12

Am Beispiel der Sulfatester wird das Netzverhalten einer 1 gew.-%igen wäßrigen Lösung von [Isopropylammonium-6-sulfatohexyl]trimethylsilan in Abhängigkeit von der Lagerdauer demonstriert.

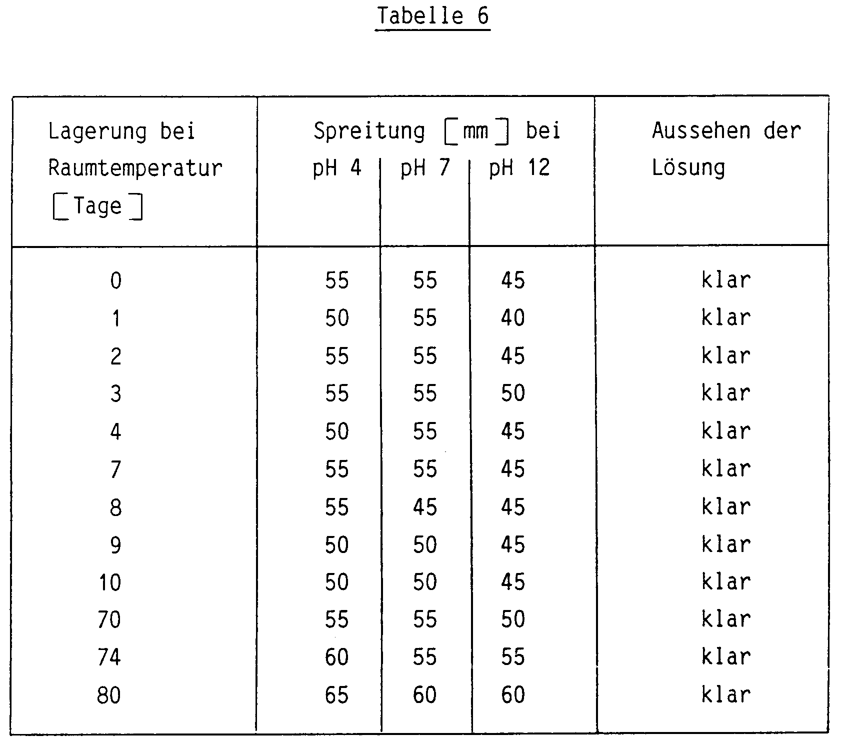

Die Untersuchung bestätigt eine excellente Hydrolysestabilität im neutralen als auch in alkalischen und sauren pH-Bereichen.

### Vergleichsbeispiel

Zum Vergleich wird die 1 gew.-%ige wäßrige Lösung eines nicht erfindungsgemäßen Siloxansulfatesters der durchschnittlichen Formel 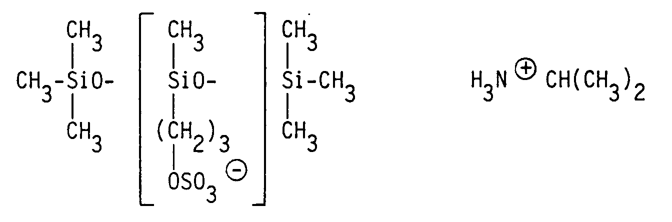 auf Stabilität des Siloxantensids in wäßriger Lösung unterschiedlichen pH-Wertes untersucht.

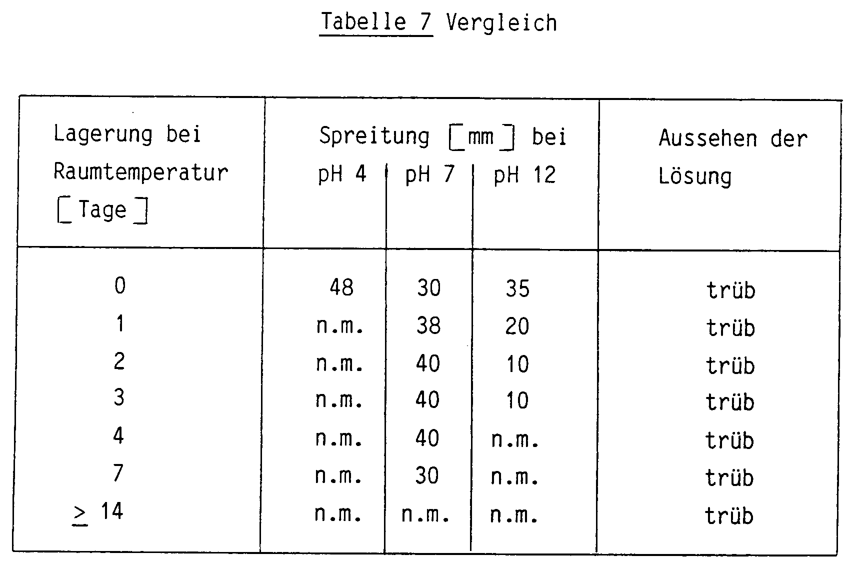

n.m. bedeutet, daß eine Spreitung nicht beobachtet werden konnte und deshalb nicht meßbar war.

## Patentansprüche

1. Silane der allgemeinen Formel 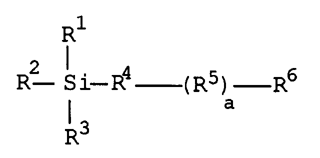 wobei
R¹, R² und R³ im Molekül gleich oder verschieden sind und Alkylreste mit 1 bis 4 Kohlenstoffatomen bedeuten,
R⁴ ein zweiwertiger Kohlenwasserstoffrest mit 3 bis 14 Kohlenstoffatomen ist,
R⁵ ein Rest der Formel -O(CH₂)_{b}- oder ein Polyetherrest der Formel -(OCₙH₂ₙ)_{c}- ist, wobei b einen Wert von 1 bis 6 hat und, wenn R⁴ der Propylrest ist, b > 1 ist, n einen mittleren Wert von 2 bis 2,5 und c einen Wert von 1 bis 10 hat,
R⁶ ein Rest -OSO₃X oder ein -OR⁷ Rest ist, wobei X ein Wasserstoff-, Alkali- oder ein gegebenenfalls substituiertes Ammonium-Ion und R⁷ ein Alkylrest mit 1 bis 4 Kohlenstoffatomen oder ein Acetylrest ist,
a 0 oder 1 ist,
mit der Maßgabe, daß, wenn R⁶ die Bedeutung des -OR⁷ Restes hat, a = 1 ist.

2. Silane nach Anspruch 1, dadurch gekennzeichnet, daß mindestens 90 % der Reste R¹, R² und R³ Methylreste sind.

3. Silane nach einem oder mehreren der vohergehenden Ansprüche, dadurch gekennzeichnet, daß der Rest R⁴ ein zweiwertiger aliphatischer Kohlenwasserstoffrest mit 3 bis 14 Kohlenstoffatomen ist.

4. Silane nach Anspruch 3, dadurch gekennzeichnet, daß der Rest R⁴ ein zweiwertiger aliphatischer Kohlenwasserstoffrest mit 3 bis 9 Kohlenstoffatomen ist.

5. Silane nach Anspruch 4, dadurch gekennzeichnet, daß der Rest R⁴ ein zweiwertiger aliphatischer Kohlenwasserstoffrest mit 3 bis 6 Kohlenstoffatomen ist.

6. Silane nach einem oder mehreren der vorhergehenden Ansprüche, dadurch gekennzeichnet, daß der Rest R⁵ ein Polyetherrest ist, bei welchem n einen Wert von 2 und c einen Wert von 3 bis 6 hat.

7. Silane nach einem oder mehreren der vorhergehenden Ansprüche, dadurch gekennzeichnet, daß X ein Alkylammoniumrest ist, dessen Alkylrest(e) 1 bis 10 Kohlenstoffatome aufweist (aufweisen).

8. Verfahren zur Herstellung der Silane nach den Ansprüchen 1 bis 7, dadurch gekennzeichnet, daß man
a) an Silane der allgemeinen Formel 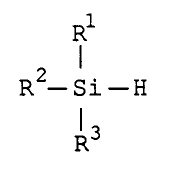 entweder
(i) Verbindungen der allgemeinen Formel CH₂=CH-R⁸-OH, in der R⁸ ein zweiwertiger aliphatischer Kohlenwasserstoffrest mit 1 bis 12 Kohlenstoffatomen ist, in Gegenwart eines Hydrosilylierungskatalysators anlagert und gegebenenfalls c Mol eines Alkylenoxids der allgemeinen Formel 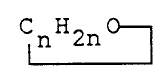 in Gegenwart eines alkalischen Katalysators oder einer Lewis-Säure addiert oder
(ii) Verbindungen der allgemeinen Formel CH₂=CH-R⁸-(R⁵)ₐ-OH, in der R⁵ und R⁸ die bereits angegebene Bedeutung haben, in Gegenwart eines Hydrosilylierungskatalysators anlagert oder
(iii) Verbindungen der allgemeinen Formel CH₂=CH-R⁸-(R⁵)ₐ-OR⁷, in der R⁵, R⁷ und R⁸ die bereits angegebene Bedeutung haben, in Gegenwart eines Hydrosilylierungskatalysators anlagert
und
b) die gemäß Verfahrensweise (i) und (ii) erhaltenen Verbindungen der Formel 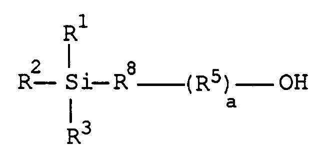 in an sich bekannter Weise sulfatiert und, falls erwünscht, mit Alkalihydroxid oder Ammoniumhydroxid, dessen am Stickstoffatom befindliche Wasserstoffatome substituiert sein können, neutralisiert.

9. Verfahren nach Anspruch 8, dadurch gekennzeichnet, daß man die Hydrosilylierung bei erhöhter Temperatur und/oder in Gegenwart eines Lösungsmittels durchführt.

10. Verfahren nach Anspruch 8 oder 9, dadurch gekennzeichnet, daß man die Hydrosilylierung in Gegenwart eines Platinkatalysators durchführt.

11. Verwendung der Silane der allgemeinen Formel 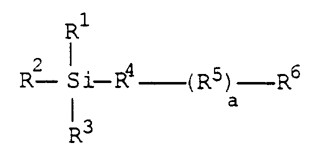 wobei
R¹, R² und R³ im Molekül gleich oder verschieden sind und aliphatische Kohlenwasserstoffe bedeuten,
R⁴ ein zweiwertiger Kohlenwasserstoffrest mit 3 bis 14 Kohlenstoffatomen ist,
R⁵ ein Rest der Formel -O(CH₂)_{b}- oder ein Polyetherrest der Formel -(OCₙH₂ₙ)_{c}- ist, wobei b einen Wert von 1 bis 6, n einen mittleren Wert von 2 bis 2,5 und c einen Wert von 1 bis 10 hat,
R⁶ ein Rest -OSO₃X oder ein -OR⁷ Rest ist, wobei X ein Wasserstoff-, Alkali- oder ein gegebenenfalls substituiertes Ammonium-Ion und R⁷ ein Alkylrest mit 1 bis 4 Kohlenstoffatomen oder ein Acetylrest ist,
a 0 oder 1 ist,
mit der Maßgabe, daß, wenn R⁶ die Bedeutung des -OR⁷ Restes hat, a = 1 ist,
als biologisch abbaubare, hydrolysestabile Tenside in Wasser enthaltenden Medien.

## Claims

1. Silanes of the general formula 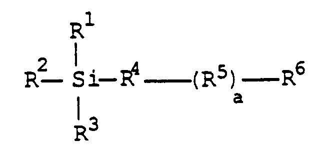 where
R¹, R² and R³ are identical or different in the molecule and are alkyl radicals having from 1 to 4 carbon atoms,
R⁴ is a divalent hydrocarbon radical having from 3 to 14 carbon atoms,
R⁵ is a radical of the formula -O(CH₂)_{b}- or a polyether radical of the formula -(OCₙH₂ₙ)_{c}-, where b is from 1 to 6 and, when R⁴ is the propyl radical, b is > 1, n has a mean value of from 2 to 2.5 and c is from 1 to 10,
R⁶ is an -OSO₃X or an -OR⁷ radical, where X is a hydrogen, alkali metal or substituted or unsubstituted ammonium ion and R⁷ is an alkyl radical having from 1 to 4 carbon atoms or an acetyl radical,
a is 0 or 1,
with the proviso that when R⁶ is an -OR⁷ radical, a = 1.

2. Silanes according to Claim 1, characterized in that at least 90% of the radicals R¹, R² and R³ are methyl radicals.

3. Silanes according to one or more of the preceding claims, characterized in that the radical R⁴ is a divalent aliphatic hydrocarbon radical having from 3 to 14 carbon atoms.

4. Silanes according to Claim 3, characterized in that the radical R⁴ is a divalent aliphatic hydrocarbon radical having from 3 to 9 carbon atoms.

5. Silanes according to Claim 4, characterized in that the radical R⁴ is a divalent aliphatic hydrocarbon radical having from 3 to 6 carbon atoms.

6. Silanes according to one or more of the preceding claims, characterized in that the radical R⁵ is a polyether radical in which n is 2 and c is from 3 to 6.

7. Silanes according to one or more of the preceding claims, characterized in that X is an alkylammonium radical whose alkyl radical(s) has (have) from 1 to 10 carbon atoms.

8. Process for preparing the silanes according to any of Claims 1 to 7, characterized in that
a) either
(i) compounds of the general formula CH₂=CH-R⁸-OH, where R⁸ is a divalent aliphatic hydrocarbon radical having from 1 to 12 carbon atoms, are added onto silanes of the general formula 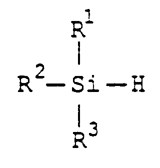 in the presence of a hydrosilylation catalyst and, if desired, c mol of an alkylene oxide of the general formula 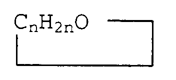 are added on in the presence of an alkaline catalyst or a Lewis acid or
(ii) compounds of the general formula CH₂=CH-R⁸-(R⁵)ₐ-OH, where R⁵ and R⁸ are as defined above, are added onto silanes of the general formula 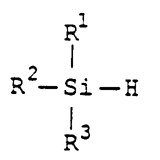 in the presence of a hydrosilylation catalyst or
(iii) compounds of the general formula CH₂=CH-R⁸-(R⁵)ₐ-OH⁷, where R⁵, R⁷ and R⁸ are as defined above, are added onto silanes of the general formula 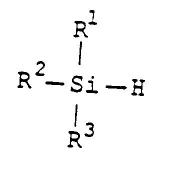 in the presence of a hydrosilylation catalyst
and
b) the compounds of the formula 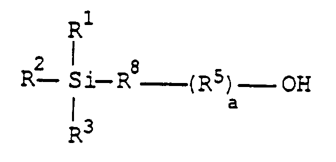 obtained by method (i) or (ii) are sulphated in a manner known per se and, if desired, neutralized with alkali metal hydroxide or ammonium hydroxide which may be substituted on the nitrogen atom.

9. Process according to Claim 8, characterized in that the hydrosilylation is carried out at elevated temperature and/or in the presence of a solvent.

10. Process according to Claim 8 or 9, characterized in that the hydrosilylation is carried out in the presence of a platinum catalyst.

11. Use of the silanes of the general formula 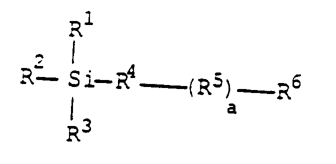 where
R¹, R² and R³ are identical or different in the molecule and are aliphatic hydrocarbons,
R⁴ is a divalent hydrocarbon radical having from 3 to 14 carbon atoms,
R⁵ is a radical of the formula -O(CH₂)_{b}- or a polyether radical of the formula -(OCₙH₂ₙ)_{c}- where b is from 1 to 6, n has a mean value of from 2 to 2.5 and c is from 1 to 10,
R⁶ is an -OSO₃X radical or an -OR⁷ radical, where X is a hydrogen, alkali metal or substituted or unsubstituted ammonium ion and R⁷ is an alkyl radical having from 1 to 4 carbon atoms or an acetyl radical,
a is 0 or 1,
with the proviso that, when R⁶ is an -OR⁷ radical, a = 1,
as biodegradable, hydrolysis-stable surfactants in water-containing media.

## Revendications

1. Silanes de formule générale : 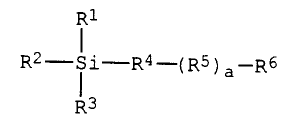 dans laquelle :
R¹, R² et R³ sont identiques ou différents dans la molécule et signifient des radicaux alkyle de 1 a 4 atomes de carbone;
R⁴ est un radical hydrocarboné divalent de 3 à 14 atomes de carbone;
R⁵ est un radical de formule -O(CH₂)_{b}- ou un radical polyéther de formule -(OCₙH₂ₙ)_{c}-, dans lequel b a une valeur de 1 à 6 et, lorsque R⁴ est le radical propyle, b > 1, n a une valeur moyenne de 2 a 2,5 et c a une valeur de 1 a 10;
R⁶ est un radical -OSO₃X ou un radical -OR⁷, X étant un ion hydrogène, un ion alcalin ou un ion ammonium facultativement substitué et R⁷ étant un radical alkyle de 1 à 4 atomes de carbone ou un radical acétyle;
a est 0 ou 1,
avec la condition que, lorsque R⁶ signifie le radical -OR⁷, a = 1.

2. Silanes suivant la revendication 1, caractérisés en ce qu'au moins 90% des radicaux R¹, R² et R³ sont des radicaux méthyle.

3. Silanes suivant une ou plusieurs des revendications précédentes, caractérisés en ce que le radical R⁴ est un radical hydrocarboné aliphatique divalent de 3 à 14 atomes de carbone.

4. Silanes suivant la revendication 3, caractérisés en ce que le radical R⁴ est un radical hydrocarboné aliphatique divalent de 3 à 9 atomes de carbone.

5. Silanes suivant la revendication 4, caractérisés en ce que le radical R⁴ est un radical hydrocarboné aliphatique divalent de 3 à 6 atomes de carbone.

6. Silanes suivant une ou plusieurs des revendications précédentes, caractérisés en ce que le radical R⁵ est un radical polyéther dans lequel n vaut 2 et c vaut 3 à 6.

7. Silanes suivant une ou plusieurs des revendications précédentes, caractérisés en ce que X est un radical alkylammonium, dont le ou les radicaux alkyle présentent 1 à 10 atomes de carbone.

8. Procédé de préparation des silanes suivant les revendications 1 à 7, caractérisé en ce que
a) à des silanes de formule générale 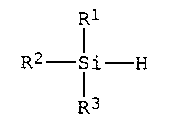
(i) soit on additionne des composés de formule générale CH₂=CH-R⁸-OH, dans lesquels R⁸ est un radical hydrocarboné aliphatique divalent de 1 à 12 atomes de carbone, en présence d'un catalyseur d'hydrosilylation, et on ajoute le cas échéant c moles d'un oxyde d'alkylène de formule générale 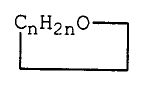 en présence d'un catalyseur alcalin ou d'un acide de Lewis, ou
(ii) on additionne des composés de formule générale CH₂=CH-R⁸-(R⁵)ₐ-OH, dans lesquels R⁵ et R⁸ ont la signification déjà donnée, en présence d'un catalyseur d'hydrosilylation, ou
(iii) on additionne des composés de formule générale CH₂=CH-R⁸-(R⁵)ₐ-OR⁷, dans lesquels R⁵, R⁷ et R⁸ ont la signification déjà donnée, en présence d'un catalyseur d'hydrosilylation,
et
b) les composés obtenus suivant la façon de procéder (i) et (ii), de formule 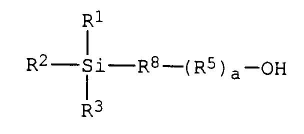 sont sulfatés de manière connue en soi et, si on le souhaite, neutralisés avec un hydroxyde alcalin ou un hydroxyde d'ammonium, dont des atomes d'hydrogène situés sur l'atome d'azote peuvent être substitués.

9. Procédé suivant la revendication 8, caractérisé en ce que l'on réalise l'hydrosilylation à température élevée et/ou en présence d'un solvant.

10. Procédé suivant la revendication 8 ou 9, caractérisé en ce que l'on réalise l'hydrosilylation en présence d'un catalyseur au platine.

11. Utilisation des silanes de formule générale : 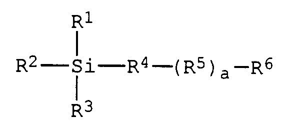 dans laquelle :
R¹, R² et R³ sont identiques ou différents dans la molécule et signifient des hydrocarbures aliphatiques;
R⁴ est un radical hydrocarboné divalent de 3 à 14 atomes de carbone;
R⁵ est un radical de formule -O(CH₂)_{b}- ou un radical polyéther de formule -(OCₙH₂ₙ)_{c}-, b ayant une valeur de 1 à 6, n ayant une valeur moyenne de 2 à 2,5 et c ayant une valeur de 1 à 10;
R⁶ est un radical -OSO₃X ou un radical -OR⁷, X étant un ion hydrogène, un ion alcalin ou un ion ammonium facultativement substitué et R⁷ étant un radical alkyle de 1 à 4 atomes de carbone ou un radical acétyle;
a est 0 ou 1,
avec la condition que, lorsque R⁶ signifie le radical -OR⁷, a = 1,
comme agents tensioactifs biodégradables, stables à l'hydrolyse, dans des milieux aqueux.
